# EUROPEAN PATENT APPLICATION

(11) **EP 1 723 849 A1**
(43) Date of publication of application: **22.11.2006**
(21) Application number: 06381016.2
(22) Date of filing: 04.04.2006
(51) Int. Cl.: A01M 29/02

(54) **Crop pest repelling device**

(30) Priority: 29.04.2005 ES 200500969 U
(71) Applicant: Servicroma, S.L., 08908 L' Hospitalet de Llobregat, Barcelona (ES)
(72) Inventor: Blanco Valle, José Servicroma S.L., 08908 L'Hospitalet de Llobrega(Barcelona (ES)
(74) Representative: Urizar Anasagasti, Jesus Maria

(57) **Abstract**

The present invention relates to a portable water treatment plant, integrating all the necessary elements to make raw water potable, including saltwater for its desalination by reverse osmosis, in which all the elements forming the plant are strategically arranged and are assembled inside an enveloping, rigid and resistant steel structure (1), having a significantly parallelepiped shape, suitable for being transported in truck-like vehicles, or in the cargo hold of a commercial airplane, inside a standard container, its components being distributed in a single module or in two modules that can be connected by quick connections.

## Description

### Object of the Invention

The present invention relates to a crop pest repelling device, of the type of those comprising an ultrasound transducer for repelling different insect pests in crops, both outdoors and in greenhouses.

### Background of the Invention

Today, there are various repellants of insects, rodents or other animal species which include an ultrasound generator circuit.

The ultrasound generator circuit may have different components according to the ultrasounds to be generated and the infestations of insects and/or rodents to be repelled, it being possible for it to consist of, by way of example, an ultrasound transducer, an associated electronic, frequency and sweep generator circuit, and a standalone power source.

Usually, these repellants have reduced dimensions, facilitating their transportation and location, being especially useful in greenhouse crops, where pests grow very rapidly.

When a repellant of this type is used in plant crops, the problem that arises is that the plants can completely cover the repellant, muffling the dispersion of the ultrasounds and accordingly the effectiveness of the repellant. When sowing is started, these repellants are placed at a certain distance and on the ground or at a short height as the plants have just been sowed. As said plants grow, the concealment of the repellant is greater and its efficiency is reduced, particularly on the high areas of the plants, which also are the most feasible places for a possible infestation of insects, for example, as it is where the most tender shoots are.

For example, the repellant of Utility Model U200000744 from the same applicant, in which a repellant of this type inside a domestic-use casing for embedding is described, is known.

### Description of the Invention

The crop pest repelling device of the present invention, belonging to those comprising an ultrasound transducer, has special technical features that allow optimal efficiency during the entire growing period of the plants to be protected from pests.

The repelling device comprises a hollow and elongated tubular body, which has a tip on one end for vertically driving it into the ground, whereas the ultrasound transducer is arranged on any area of said tubular body and facing the inside thereof, although preferably it has been provided for that said transducer is arranged on the upper end of the tubular body and facing the inside of said tubular body.

According to the invention, the tubular body has a plurality of considerably radial openings distributed therealong, forming for example helical rows, the ultrasounds being dispersed outwardly from the tubular body through said openings.

Given the height of the tubular body, it is ensured that the ultrasounds act on the entire height of the plants located around the tubular body, regardless of the height the plants reach during their growth.

### Description of the Drawings

In order to supplement the description being made and for the purpose of aiding in the understanding of the features of the invention, a set of drawings is attached to the present specification in which, illustratively and in a non limiting way, the following has been depicted:

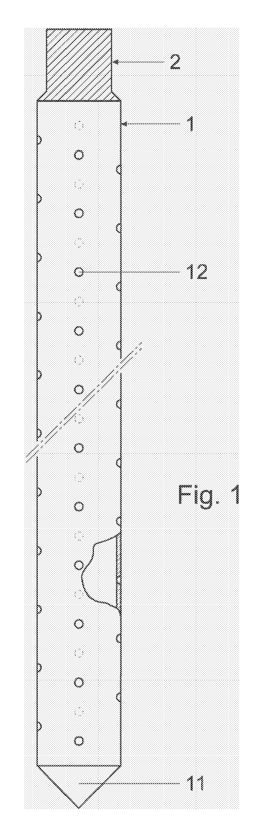

Figure 1 shows an elevational view of an embodiment of the repelling device, partially cut away so as to allow observing the inside space.

### Preferred Embodiment of the Invention

As can be observed in the referenced figure, the repelling device comprises a hollow and elongated tubular body (1) having on its lower end a tip (11) so as to facilitate driving it into the ground, and having on its upper end an ultrasound transducer (2) facing the inside of said tubular body (1).

Said body (1) has throughout its length a plurality of considerably radial openings (12) for communicating the inside and the outside. In the example shown, said openings (12) form helical rows along the tubular body (1) so as to provide an omnidirectional dispersion, according to the transverse plane, of the ultrasounds generated by the transducer (2) at any height of the body (1).

Having sufficiently described the nature of the invention, as well as a preferred embodiment, it is stated for all intents and purposes that the materials, shape, size and arrangement of the elements described may be modified, provided that this does not entail an alteration of the essential features of the invention, which are claimed below.

## Claims

1. A crop pest repelling device, of the type comprising an ultrasound transducer (2), an associated electronic, frequency and sweep generator circuit, and a standalone power source, **characterized in that** it comprises a tubular body (1) having end a tip (11) on its lower for driving it into the ground and carrying an ultrasound transducer (2) facing the inside of said tubular body (1), said body (1) having a plurality of considerably radial openings (12) arranged along its entire length for the omnidirectional dispersion of the ultrasounds outwardly from the tubular body.

2. A device according to claim 1, **characterized in that** the transducer (2) is mounted on the upper end of the tubular body (1).

3. A device according to claim 1, **characterized in that** the dispersion openings (12) form helical alignments along the tubular body (1).
